# EUROPÄISCHE PATENTSCHRIFT

(11) **EP 3 140 552 B1**
(45) Veröffentlichungstag und Bekanntmachung des Hinweises auf die Patenterteilung: **29.07.2020**
(21) Anmeldenummer: 15713512.0
(22) Anmeldetag: 02.04.2015
(51) Int. Cl.: F15B 15/10

(54) **HYDRAULIKFLACHZYLINDER, HYDRAULIKHUBKISSEN, VERWENDUNG EINES SOLCHEN UND VERFAHREN ZUM AUSRICHTEN EINES GENERATORS**
HYDRAULIC FLAT CYLINDER, HYDRAULIC LIFTING CUSHION AND USE THEREOF, AND METHOD FOR ALIGNING A GENERATOR
VÉRIN HYDRAULIQUE PLAT, COUSSIN DE LEVAGE, SON UTILISATION, ET PROCÉDÉ D'ALIGNEMENT D'UN GÉNÉRATEUR

(30) Priorität: 05.05.2014 DE 102014208375
(43) Veröffentlichungstag der Anmeldung: 15.03.2017
(73) Patentinhaber: Wobben Properties GmbH, 26607 Aurich (DE)
(72) Erfinder: RÖER, Jochen, 27777 Ganderkesee (DE)
(74) Vertreter: Eisenführ Speiser
(86) Internationale Anmeldenummer: PCT/EP2015/057330
(87) Internationale Veröffentlichungsnummer: WO 2015/169517

(56) Entgegenhaltungen:
- DE-A1- 10 203 008
- DE-A1-102011 121 882
- FR-A1- 2 414 021
- US-A- 3 822 861
- US-A1- 2005 066 810
- "PNEUMATIC CYLINDERS EPITOMIZE VARIETY", HYDRAULICS AND PNEUMATICS, PENTON MEDIA, CLEVELAND, OH, US, Bd. 53, Nr. 11, 1. November 2000 (2000-11-01), XP001017747, ISSN: 0018-814X

## Beschreibung

Die vorliegende Erfindung betrifft in einem ersten Aspekt einen Hydraulikflachzylinder nach dem Oberbegriff von Anspruch 1. Hydraulikflachzylinder sind in vielen Bereichen der Industrie vertreten und werden dazu eingesetzt, Lasten zu stützen oder anzuheben. Hierzu weisen bekannte Flachzylinder einen Grundkörper auf, in dem ein Kolben verschieblich angeordnet ist. Zwischen Grundkörper und Kolben ist ein Arbeitsraum für ein Druckmedium ausgebildet. Für hohe Lasten wird Hydraulikflüssigkeit verwendet. Der Flachzylinder weist eine erste Kraftübertragungsfläche auf, und der Kolben eine zweite Kraftübertragungsfläche. Bei Druckbeaufschlagung des Volumens zwischen Kolben und Grundkörper wird der Kolben relativ zum Grundkörper bewegt, wodurch eine Hubbewegung erzeugt wird. Bei der Hubbewegung ändert sich der Abstand zwischen den beiden Kraftübertragungsflächen.

In der prioritätsbegründenden deutschen Anmeldung hat das Deutsche Patent- und Markenamt die folgenden Dokumente recherchiert: DE 602 08 080 T2, DE 10 2007 036 487 A1, DE 102 03 008 A1 und GB 1 604 141 A.

US 2005/066810 A1 D1 offenbart einen fluidischen Antrieb umfassend einen Hohlkörper mit einer Balgstruktur, der zwischen zueinander beweglichen Stab- oder Stützstrukturen angeordnet ist.

DE 10 2011 1218821 A1 betrifft eine Arbeitsvorrichtung mit einem Membrankörper zwischen zwei zueinander beabstandet angeordneten Kopfstücken, wobei die Kopfstücke über ein Rückstellelement gekoppelt und mittels des Rückstellelementes aktiv in eine Grundstellung zurückbewegt werden.

US 3 822 861 A zeigt eine aufblasbare Vorrichtung zum Entfernen von Formteilen an gegossenem Beton mit einer im Volumen veränderbaren Blase aus flexiblem, elastomerem Material. Die Blase ist mit einer Leitung verbunden, über die, ausgehend von einer Hydraulikpumpe, die Blase mit einem Fluid unter Druck gesetzt werden kann.

Hydraulikflachzylinder der vorstehend genannten Art funktionieren im Allgemeinen im Rahmen ihrer Einsatzgebiete zufriedenstellend, haben allerdings einige technische Limitationen. Zum einen ist die Bauhöhe, insbesondere in Hubrichtung, relativ hoch, da zum Führen des Kolbens im Grundkörper eine gewisse Mindesthöhe gewährleistet sein muss, damit einerseits ein ausreichender Hub erzeugt wird und andererseits kein Verkanten des Kolbens im Grundkörper auftritt. Ein weiterer, wesentlicher Nachteil bei den bekannten Hydraulikflachzylindern ist derjenige, das prinzipbedingt zwischen den relativ beweglichen Teilen des Kolbens und des Grundkörpers Dichtmittel vorgesehen werden müssen, die einen Austritt von Hydraulikflüssigkeit aus dem Arbeitsraum verhindern. Bei Überschreiten bestimmter Drücke oder Veränderungen in der Flüssigkeitszusammensetzung kommt es aber prinzipbedingt zu Leckagen. Diese Limitationen sorgen dafür, dass Hydraulikflachzylinder nicht für alle Einsatzzwecke geeignet sind.

Der Erfindung lag somit die Aufgabe zugrunde, einen Hydraulikflachzylinder dahingehend zu verbessern, dass die vorstehend genannten Nachteile möglichst weitgehend behoben werden. Insbesondere lag der Erfindung die Aufgabe zugrunde, einen Hydraulikflachzylinder der eingangs bezeichneten Art hinsichtlich seiner Bauhöhe und Leckageanfälligkeit zu verbessern.

Die Erfindung löst die ihr zugrunde liegende Aufgabe bei einem Hydraulikflachzylinder der eingangs bezeichneten Art mit den Merkmalen nach Anspruch 1. Insbesondere weist der erfindungsgemäße Hydraulikflachzylinder ein Gehäuse auf, welches eine erste Kraftübertragungsfläche, eine zweite Kraftübertragungsfläche und eine Gehäusewand aufweist, wobei die zweite Kraftübertragungsfläche relativ zu der ersten Kraftübertragungsfläche abstandsveränderlich angeordnet ist, und ein Hydraulikanschluss zum Ein- und Auslassen von Hydraulikflüssigkeit in das Gehäuse bzw. aus dem Gehäuse, wobei die Gehäusewand, die erste und die zweite Kraftübertragungsfläche ein einteiliges Druckkissen ausbilden, und wobei die beiden Kraftübertragungsflächen im drucklosen Zustand unmittelbar benachbart zueinander angeordnet sind.

Die Erfindung macht sich hierbei die Erkenntnis zunutze, dass durch die Ausbildung der Gehäusewand und der Kraftübertragungsflächen als einteiliges Druckkissen zugleich mehrere entscheidende Verbesserungen erzielt werden. Dadurch, dass die Kraftübertragungsflächen und das Gehäuse einteilig miteinander verbunden sind, entfällt die Notwendigkeit von Dichtmitteln zwischen den verschiedenen Teilen. Ein Flüssigkeitsaustritt ist aufgrund der Einteiligkeit verhindert. Ferner wird durch die Ausbildung als Druckkissen ermöglicht, dass im drucklosen Zustand die beiden Kraftübertragungsflächen unmittelbar benachbart zueinander angeordnet sind. Erst durch Einfüllen von Hydraulikflüssigkeit in das Gehäuse wird das Druckkissen befüllt, und die Kraftübertragungsflächen weiter voneinander beabstandet. Durch dieses Konstruktionsprinzip wird eine minimale Bauhöhe erreicht, die einen Einsatz beispielsweise in Spalten zwischen zwei voneinander abzuhebenden oder relativ zueinander auszurichtenden Bauteilen ermöglicht, in welchen konventionelle Hydraulikflachzylinder nicht eingesetzt werden können.

In einer bevorzugten Weiterbildung der Erfindung sind die erste und zweite Kraftübertragungsfläche mittels der Gehäusewand miteinander verbunden, wobei die Gehäusewand mittels Druckbeaufschlagung des Gehäuses elastisch verformbar ist. Vorzugsweise ist die Gehäusewand derart elastisch verformbar, dass der Abstand der Kraftübertragungsflächen in Hubrichtung sich in Folge der elastischen Verformung verändert.

Wie sich aus dem Vorstehenden ergibt, ist der erfindungsgemäße Hydraulikflachzylinder kolbenlos ausgebildet, was eine verringerte Wartungsanfälligkeit zur Folge hat.

Erfindungsgemäß ist die Gehäusewand des Hydraulikflachzylinders faltenbalgförmig ausgebildet.

In einer weiteren bevorzugten Ausgestaltung weist das Gehäuse einen Grundkörper auf, in welchem der Hydraulikanschluss ausgebildet ist.

Gemäß der vorliegenden Erfindung ist die Gehäusewand aus mehreren gestapelten Blechen gebildet. In einer bevorzugten Weiterbildung dieser Ausgestaltung weist der Grundkörper die erste Kraftübertragungsfläche auf, und das Gehäuse weist ferner einen Kopfkörper auf, welcher die zweite Kraftübertragungsfläche aufweist.

Vorzugsweise ist ein erstes Blech, vorzugsweise entlang seines Umfang, an dem Grundkörper befestigt, ein letztes Blech an dem Kopfkörper befestigt, und zwischen dem ersten und letzten Blech weitere Bleche gestapelt, die auf einer ersten Seite entlang eines ersten Flächenbereichs an einem benachbarten Blech befestigt sind, und auf einer der ersten Seite gegenüberliegenden zweiten Seite entlang eines zweiten Flächenbereichs mit einem weiteren benachbarten Blech verbunden sind, wobei zwischen dem ersten und zweiten Flächenbereich jeweils ein Versatz quer zur Umfangsrichtung ausgebildet ist, entlang dessen die benachbarten Bleche unverbunden bleiben.

Vorzugsweise weisen die Bleche einen zylindrischen äußeren Umfang auf und sind insbesondere ringförmig ausgebildet.

In einer bevorzugten Ausgestaltung ist der erste Flächenbereich als Band ausgebildet, das sich vom äußeren Umfang aus nach innen erstreckt, und der zweite Flächenbereich ist als Band ausgebildet, das sich vom inneren Umfang aus nach außen erstreckt.

Vorzugsweise sind die Bleche jeweils mittels Laserschweißen miteinander verbunden. Bei diesem Verfahren werden vorzugsweise zwei Bleche aufeinander gelegt und von einer Seite mit konstantem Randabstand verschweißt. Dabei verschmelzen die beiden Bleche und ergeben eine Verbindung, die festigkeitsmäßig im Wesentlichen der Festigkeit des Grundmaterials entspricht.

In einer bevorzugten Ausführungsform der Erfindung weist der Hydraulikanschluss eine Kupplung zum wahlweisen Anschluss einer Befüllleitung oder eines Druckmessaufnehmers zum Ermitteln des Gehäuseinnendrucks auf. Vorzugsweise ist die Kupplung als Schraubkupplung ausgebildet und weist eine Rückschlagdichtung, beispielsweise eine Kugelabdichtung, auf. Schraubkupplungen der vorstehend genannten Art werden üblicherweise als Mess- und Prüfkupplungen oder als Testpunkte bezeichnet und sind unter anderem unter der Bezeichnung "Minimess" bei dem Unternehmen Hydrotechnik GmbH erhältlich.

Da die Größe der Kraftübertragungsflächen einfach bestimmbar und somit bekannt ist, kann über eine Ermittlung des Gehäuseinnendrucks jederzeit unmittelbar festgestellt werden, welche Druckkraft der Hydraulikflachzylinder ausübt bzw. aufnimmt. Werden beispielsweise mehrere Hydraulikflachzylinder in einem System betrieben, die an verschiedenen Punkten das gleiche Bauteil stützen oder heben, lässt sich in Verbindung mit der geometrischen Anordnung der Hydraulikflachzylinder untereinander und der von ihnen jeweils ausgeübten Kraft bzw. aufgenommenen Kraft der Schwerpunkt des aufgenommenen Bauteils ermitteln.

Gemäß einem zweiten Aspekt betrifft die vorliegende Erfindung ein Hydraulikhubkissen. Das erfindungsgemäße Hydraulikhubkissen löst ebenfalls die dem Hydraulikflachzylinder zugrunde liegende Aufgabe, die prinzipbedingten Nachteile von bekannten Hydraulikflachzylindern zu beheben, insbesondere ein Hubwerkzeug anzugeben, welches leckagefrei ist und eine minimale Bauteilgröße aufweist.

Erfindungsgemäß ist das Hydraulikhubkissen mit den Merkmalen von Anspruch 9 ausgebildet. Erfindungsgemäß ist das Hydraulikhubkissen als Flachkörper ausgebildet und zum Einführen in einen Luftspalt dimensioniert, beispielsweise in einen Luftspalt zwischen einem Rotor und einem Stator, und weist eine erste Kraftübertragungsfläche, eine zweite Kraftübertragungsfläche und eine Gehäusewand auf, wobei die zweite Kraftübertragungsfläche relativ zu der ersten Kraftübertragungsfläche abstandsveränderlich angeordnet ist, sowie einen Hydraulikanschluss zum Ein- und Auslassen von Hydraulikflüssigkeit in das Gehäuse bzw. aus dem Gehäuse, wobei die Gehäusewand, die erste und zweite Kraftübertragungsfläche ein einteiliges Druckkissen ausbilden, und wobei das einteilige Druckkissen einen ersten Volumenabschnitt, einen zweiten Volumenabschnitt und einen die beiden Volumenabschnitte fluidleitend verbindenden Verteilerkanal aufweist, und wobei der Hydraulikanschluss an dem Verteilerkanal angeordnet ist.

Das Hydraulikhubkissen teilt sich somit die wesentlichen Merkmale der Erfindung des Hydraulikflachzylinders gemäß dem ersten Aspekt der Erfindung mit der Ausnahme, dass es nicht als Hubzylinder ausgeformt ist, sondern als Flachkörper, der noch besser dazu geeignet ist als der Hydraulikflachzylinder, selbst in schmalste Spalte eingeführt zu werden. Luftspalte wie der vorstehend erwähnte sind beispielsweise ausgebildet zwischen einem Rotor und einem Stator eines Generators einer Windenergieanlage oder eines Wasserkraftwerks. Die Luftspalte zwischen Rotor und Stator liegen häufig im einstelligen Millimeterbereich, bei Generatoren von Windenergieanlagen der hiesigen Anmelderin beispielsweise im Bereich unterhalb 3 mm. Für eine zuverlässige Funktion solcher Generatoren, die insbesondere als langsam drehende Synchrongeneratoren ausgebildet sein können, ist es von wesentlicher Bedeutung, dass der Luftspalt entlang seines Umfangs möglichst konstant ist. Dies erfordert eine sehr präzise Ausrichtung zwischen Rotor und Stator.

Da zur Ausrichtung solcher Bauteile zueinander konventionelle Hydraulikflachzylinder aufgrund ihrer Bauteilgröße und insbesondere Höhe in Hubrichtung nicht in Frage kommen, hat man bislang beispielsweise mittels radial ausgerichteter Stellschrauben oder einer gezielten Ansteuerung, d. h. Magnetfelderzeugung in bestimmten Umfangsbereichen des Generators, eine Ausrichtung des Rotors relativ zum Stator vorgenommen. Es war daher erstrebenswert, im Vergleich zu den bekannten Maßnahmen eine einfachere und gleichzeitig präzisere Ausrichtmöglichkeit vorzusehen. Diese bietet das erfindungsgemäße Hydraulikhubkissen.

Erfindungsgemäß weist das einteilige Druckkissen einen ersten Volumenabschnitt, einen zweiten Volumenabschnitt und einen die beiden Volumenabschnitte fluidleitend verbindenden Verteilerkanal auf, wobei der Hydraulikanschluss an dem Verteilerkanal angeordnet ist. Das derart ausgebildete Hydraulikkissen ähnelt in seiner Draufsicht einer Lunge mit zwei Lungenflügeln. Vorzugsweise ist der erste Volumenabschnitt dazu eingerichtet und dimensioniert, zwischen einen ersten Pol des Rotors und den Stator eingeführt zu werden, während der zweite Volumenabschnitt dazu eingerichtet und dimensioniert ist, zwischen einen zweiten Pol und den Stator eingeführt zu werden. Der zwischen den beiden Volumenabschnitten liegende Hydraulikanschluss kann sodann zwischen den Polen angeordnet sein, wo konstruktiv mehr Bauraum für den Hydraulikanschluss zur Verfügung steht.

Auch beim Hydraulikhubkissen weist vorzugsweise der Hydraulikanschluss eine Kupplung zum wahlweisen Anschluss einer Befüllleitung oder eines Druckmessaufnehmers zum Ermitteln des Gehäuseinnendrucks auf, die insbesondere gemäß der weiter oben beschriebenen Ausführungsform beim erfindungsgemäßen Hydraulikflachzylinder ausgebildet ist.

Die Erfindung betrifft gemäß einem weiteren Aspekt ein Hydraulik-Hubsystem mit einer Fluidzufuhreinheit zum Bereitstellen druckbeaufschlagter Hydraulikflüssigkeit, einem oder mehreren Hydraulikflachzylindern oder einem oder mehreren Hydraulikhubkissen, und einem Fluidleitungsnetz, welches jeweils eine fluidleitende Verbindung zwischen den Hydraulikflachzylindern, oder Hydraulikhubkissen, und der Fluidzufuhreinheit herstellt.

Die Erfindung löst die ihr zugrunde liegende Aufgabe auch bei einem vorstehend genannten System dadurch, dass wenigstens einer der Hydraulikflachzylinder, vorzugsweise mehrere oder sämtliche der Hydraulikflachzylinder, oder wenigstens eines der Hydraulikhubkissen, vorzugsweise mehrere oder sämtliche der Hydraulikhubkissen, gemäß einer der vorstehend beschriebenen bevorzugten Ausführungsformen ausgebildet sind. Durch ein Hubsystem der vorstehend bezeichneten Art ist es insbesondere möglich, durch Parallelschaltung mehrerer Hydraulikflachzylinder oder Hydraulikkissen sehr hohe Lasten aufzunehmen oder zu heben. Ferner ist es möglich, durch Reihenschaltung mehrerer Hydraulikflachzylinder oder Hydraulikhubkissen, insbesondere mittels Aufeinanderstapelns dieser Hydraulikflachzylinder oder Hydraulikhubkissen, relativ große Hübe zu realisieren, ohne dass dabei Leckage an den Hydraulikflachzylindern bzw. Hydraulikhubkissen auftritt. Hierdurch wird der prinzipbedingt geringe Hub eines einzelnen Hydraulikflachzylinders bzw. Hydraulikhubkissens wettgemacht.

Vorzugsweise ist bei dem erfindungsgemäßen Hubsystem jeder Hydraulikflachzylinder oder jedes Hydraulikhubkissen individuell mit Druck beaufschlagbar. So ist es beispielsweise bei der Verwendung mehrerer Hydraulikhubkissen zum Ausrichten eines Rotors relativ zu einem Stator eines Generators möglich, durch individuelle Druckbeaufschlagung der Hydraulikhubkissen, die an verschiedenen Stellen entlang des Umfangs des Luftspalts angeordnet sind, eine gezielte Ausrichtung in mehreren Richtungen vorzunehmen, indem jeder einzelne Gehäuseinnendruck entsprechend eingeregelt wird.

Die Erfindung betrifft gemäß einem weiteren Aspekt ein Verfahren nach Anspruch 14 zum Ausrichten der Relativposition eines Rotors zu einem Stator eines Generators, insbesondere eines (langsam drehenden) Synchrongenerators, wobei zwischen dem Rotor und dem Stator ein Luftspalt ausgebildet ist. Das erfindungsgemäße Verfahren widmet sich wie vorstehend erläutert der Aufgabe, eine verbesserte Möglichkeit anzugeben, den Rotor und den Stator relativ zueinander einfach und präzise auszurichten.

Das erfindungsgemäße Verfahren löst diese Aufgabe mit den Schritten: Einführen eines oder mehrerer Hydraulikhubkissen in den Luftspalt, und Beaufschlagen des oder der Hydraulikhubkissen derart mit druckbeaufschlagter Hydraulikflüssigkeit, dass der Luftspalt entlang seines Umfangs konstant ist. Der Luftspalt wird vorzugsweise entlang mehrerer Stellen seines Umfangs mit optischen oder mechanischen Messmitteln überwacht. Beispielsweise ist alternativ auch eine manuelle Überwachung möglich. Vorzugsweise wird mittels einer elektronischen Steuereinheit oder manuell der Druck mehrerer Hydraulikhubkissen inkrementell und individuell für jedes Hydraulikhubkissen durch Erhöhen oder Verringern so lange angepasst, bis der Luftspalt entlang seines gesamten Umfangs konstant ist. Erfindungsgemäß wird unter einem langsam drehenden Synchrongenerator ein Generator verstanden, bei dem sich Rotor und Stator mit einer Umdrehungsgeschwindigkeit von 40 Umdrehungen pro Minute oder weniger drehen. Bevorzugte Drehzahlen von langsam drehenden Synchrongeneratoren bei Windenergieanlagen der hiesigen Anmelderin sind typischerweise unterhalb von 36 Umdrehungen pro Minute, beispielsweise in einem Bereich zwischen 4 Umdrehungen pro Minute und 34,5 Umdrehungen pro Minute, wobei im allgemeinen die Drehlzahl mit zunehmender Anlagengröße (und somit zunehmendem Generatordurchmesser) abnimmt.

Langsam drehende Synchrongeneratoren sind üblicherweise bei getriebelosen Windenergieanlagen anzutreffen. Hier liegt auch der erfindungsgemäße Einsatzzweck des erfindungsgemäßen Hydraulikhubkissens und des erfindungsgemäßen Verfahrens. Weitere beispielhafte Einsatzgebiete von langsam drehenden Synchrongeneratoren sind aber auch Wasserkraftwerke.

Die Erfindung betrifft schließlich auch die Verwendung eines Hydraulikhubkissens nach einer der vorstehend beschriebenen bevorzugten Ausführungsformen zum Ausrichten eines Generators einer Windenergieanlage. Hinsichtlich der erfindungsgemäßen Vorteile einer solchen Verwendung wird auf die vorstehenden Ausführungen vollumfänglich verwiesen.

Die Erfindung wird im Folgenden anhand bevorzugter Ausführungsbeispiele und unter Bezugnahme auf die beigefügten Figuren näher beschrieben. Hierbei zeigen:
- Figur 1: eine schematische Ansicht eines Hydraulikflachzylinders gemäß einem Aspekt der Erfindung in Schnittdarstellung,
- Figuren 2, 3: räumliche Ansichten eines Hydraulikhubkissens gemäß einem Aspekt der Erfindung,
- Figuren 4,5: unterschiedliche Detailansichten des Hydraulikhubkissens aus den Figuren 2 und 3, und
- Figuren 6,7: unterschiedliche Ausschnittsansichten eines Hydraulikhubkissens gemäß den Figuren 2 bis 5 beim Ausrichten eines Rotors relativ zu einem Stator.

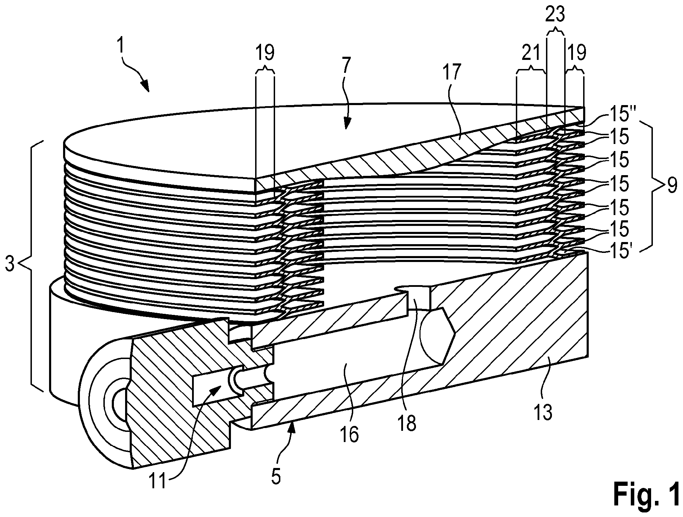

Figur 1 zeigt in einer schematischen räumlichen Darstellung einen Hydraulikflachzylinder 1 in Schnittansicht. Der Hydraulikflachzylinder 1 weist ein Gehäuse 3 auf. Das Gehäuse 3 weist an seiner Unterseite eine erste Kraftübertragungsfläche 5 auf, und an einer gegenüberliegenden Oberseite eine zweite Kraftübertragungsfläche 7. Die Kraftübertragungsfläche 5 und die Kraftübertragungsfläche 7 sind mittels einer Gehäusewand 9 verbunden und zueinander abstandsveränderlich angeordnet.

Zum Ein- und Auslassen von Hydraulikflüssigkeit in das bzw. aus dem Inneren des Gehäuses 3 ist ein Hydraulikanschluss 11 vorgesehen. Der Grundkörper 13 weist ein Sackloch 16 und eine Durchgangsbohrung 18 auf, die den Zugang zum Inneren des Gehäuses 3 für die Hydraulikflüssigkeit bereitstellen.

Die Gehäusewand 9 ist bei dem Hydraulikflachzylinder 1 in Figur 1 faltenbalgartig ausgebildet. Sie weist eine Vielzahl von aufeinandergestapelten ringförmigen Blechen 15 auf. Von diesen Blechen ist ein erstes Blech 15' am Grundkörper 13 befestigt, ein letztes Blech 15" an einem Kopfkörper 17, und zwischen dem ersten und letzten Blech 15', 15" ist eine Vielzahl untereinander gleichartiger Bleche 15 angeordnet. Die Bleche 15, 15', 15" sind abwechselnd in einem ersten Flächenbereich 19 und einem zweiten Flächenbereich 21 miteinander bzw. mit dem Grundkörper 13 oder Kopfkörper 17 verschweißt. Die beiden Flächenbereiche 19, 21 sind zueinander versetzt. In dem Bereich des Versatzes 23 zwischen den verschweißten Flächenbereichen 19. 21 sind die Bleche 15, 15', 15" elastisch verformbar, und zwar derart, dass eine elastische Verformung in einer Abstandsveränderung der ersten Kraftübertragungsfläche 5 relativ zur zweiten Kraftübertragungsfläche 7 führt. Je größer der Versatzbereich 23 in radialer Richtung ausgebildet wird, desto größer ist in Verbindung mit der Anzahl der übereinandergestapelten Bleche 15 der maximal zu erreichende Hub.

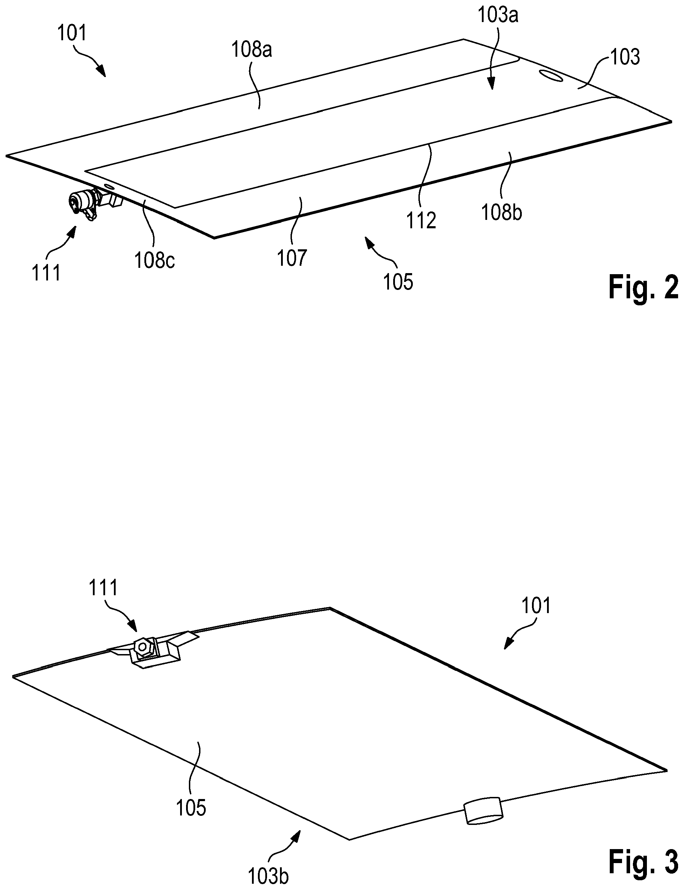

Das gleiche dichtungslose Funktionsprinzip wie beim Hydraulikflachzylinder 1 gemäß Figur 1 ist auch bei einem Hydraulikhubkissen 101 gemäß den Figuren 2 und 3 umgesetzt. Das Hydraulikhubkissen 101 weist ein Gehäuse 103 auf. Das Gehäuse 103 ist aus zwei Blechen gebildet, die jeweils eine Gehäusewand 103a, 103b darstellen. Die beiden Bleche sind nicht entlang ihrer gesamten Fläche miteinander fest verbunden, sondern lediglich abschnittsweise, so dass zwischen den Gehäusewänden 103a, 103b ein volumenveränderlicher Innenraum ausgebildet ist. Dieser sorgt für die Ausbildung des einteiligen Druckkissens und weist einen ersten Volumenabschnitt 108a, einen zweiten Volumenabschnitt 108b und einen die beiden Volumenabschnitte 108a,b verbindenden Verteilerkanal 108c auf. An dem Verteilerkanal 108c ist ein Hydraulikanschluss 111 angeordnet, der zum Ein- und Auslassen von Hydraulikflüssigkeit in die bzw. aus den Volumenabschnitten 108a,b,c des einteiligen Druckkissens ausgebildet ist.

Die beiden Bleche 103a,b sind entlang der Linie 112 miteinander verschweißt, derart, dass die Bleche 103a,b in den Bereichen unverbunden bleiben, in denen sich die Volumenabschnitte 108a,b,c befinden.

Wie auch der Hydraulikflachzylinder 1 aus Figur 1 weist das als Flachkörper ausgebildete Hydraulikhubkissen 101 eine erste, in Figur 2 und 3 untere Kraftübertragungsfläche 105 und eine gegenüberliegende zweite Kraftübertragungsfläche 107 auf. Der Abstand der Kraftübertragungsflächen 105, 107 voneinander ändert sich mittels Einfüllen von Hydraulikflüssigkeit durch den Hydraulikanschluss 111 in die Volumenabschnitte 108a,b,c.

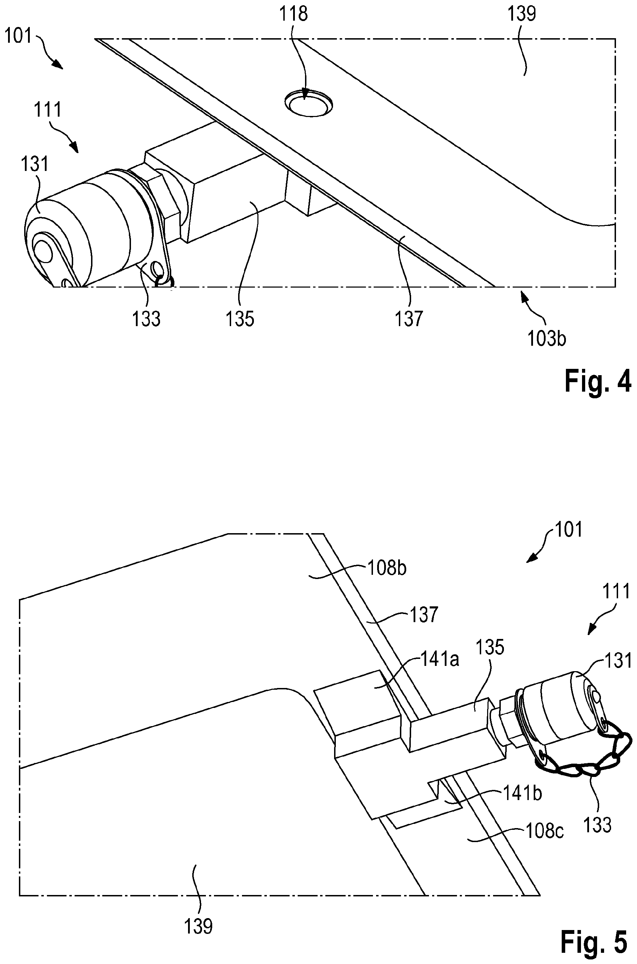

Der Hydraulikanschluss 111 ist in Figur 4 detaillierter dargestellt. Ein Grundkörper 135 weist eine Durchgangsöffnung 118 in den Verteilerkanal 108c auf. Der Hydraulikanschluss 111 ist mittels einer druckdichten Kappe 131 verschließbar, die mittels einer Verliersicherung 133 an dem Grundkörper 135 befestigt ist. Die in Figur 4 abgesetzt dargestellten Flächenbereiche 137 und 139 stellen die Bereiche dar, in denen das dargestellte Blech 103b mit dem gegenüberliegenden Blech 103a (Figuren 2,3) verbunden wird.

Wie sich ferner auch aus Figur 5 ergibt, weist der Grundkörper 135 zwei Positionierkeile 141a,b auf, die sich von dem Grundkörper aus seitlich fort erstrecken und zur Positionierung des Hydraulikhubkissens 101 in einem Luftspalt zwischen einem Rotor und Stator eines Generators dienen. Dies wird unter Bezugnahme auf die folgenden Figuren näher erläutert.

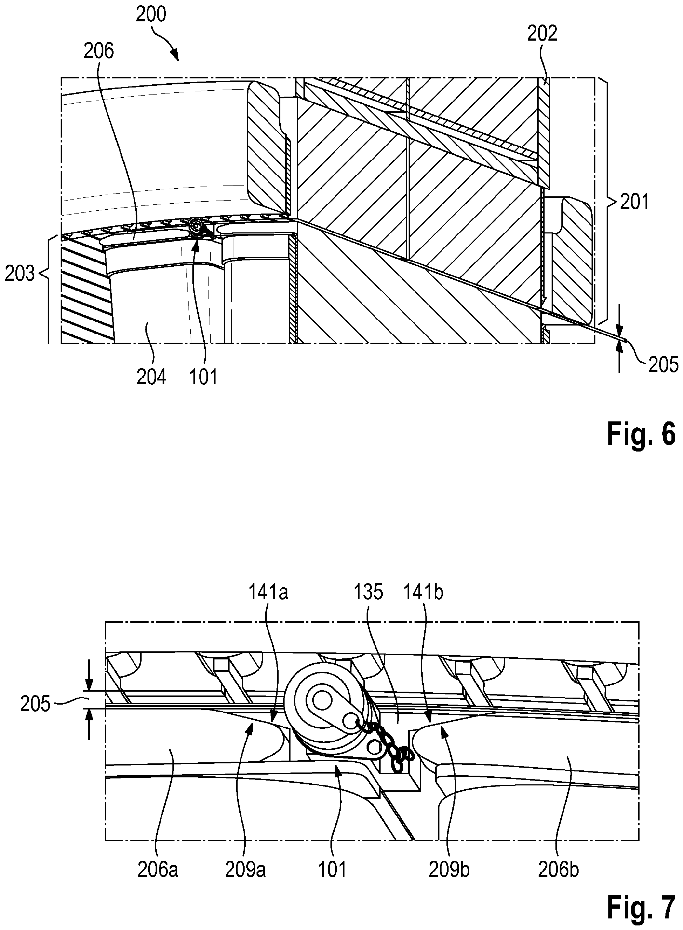

Die Figuren 6 und 7 zeigen einen Abschnitt eines Generators 200. Der Generator 200 kann beispielsweise ein langsam drehender Synchrongenerator einer Windenergieanlage oder eines Wasserkraftwerks sein. Der Generator 200 weist einen Stator 201 auf, welcher im Wesentlichen einen Statorträger 202 und eine Vielzahl von Wicklungen in Form von Statorblechpaketen umfasst. Der Generator weist ferner einen Rotor 203 auf, der eine Vielzahl von Polschuhen 204 und auf den Polschuhen angeordneten Polköpfen 206 umfasst.

Zwischen dem Stator 201 und dem Rotor 203 ist ein Luftspalt 205 ausgebildet. In den Luftspalt 205 ist in den Figuren 6 und 7 ein Hydraulikhubkissen 101 eingeführt, welches gemäß den vorstehenden Figuren ausgebildet ist.

Wie sich insbesondere aus Figur 7 ergibt, ist das Hubkissen 101 derart in den Luftspalt 205 eingeführt, dass die Positionierkeile 141a,b an korrespondierend ausgebildeten abgeschrägten Flächen 209a,b jeweils benachbarter Polköpfe 206a,b anliegen. Hierdurch wird das Hydraulikhubkissen mittig mit Bezug auf die benachbarten Polköpfe 206a,b positioniert. Der Grundkörper 135 des Hydraulikhubkissens 101 nimmt den Platz zwischen den benachbarten Polköpfen 206a,b ein.

Das erfindungsgemäße Verfahren läuft vorzugsweise dergestalt ab, dass ein Stator 201 bereitgestellt wird, in dessen Inneren ein Rotor 203 angeordnet ist, wobei zwischen dem Stator 201 und dem Rotor 203 ein Luftspalt ausgebildet ist. Zum Ausrichten des Rotors 203 und des Stators 201 relativ zueinander derart, dass der Luftspalt entlang seines Umfangs möglichst gleich dimensioniert ist, werden ein oder mehrere Hydraulikhubkissen 101 in dem Luftspalt zwischen dem Stator 201 und dem Rotor 203 angeordnet, vorzugsweise in der in den Figuren 6 und 7 dargestellten Anordnung, so dass sich ein erster Volumenabschnitt des Hydraulikhubkissens über einen ersten Polkopf 206a erstreckt, und ein zweiter Volumenabschnitt sich über einen zweiten, benachbarten Polkopf 206b erstreckt. Vorzugsweise werden die ein oder mehreren Hydraulikhubkissen an der engsten Stelle des Luftspalts in diesen eingeführt. Nach erfolgtem Einführen werden die Hydraulikhubkissen derart mit Druck beaufschlagt, dass der Spalt aufgeweitet wird. Nach Erreichen des gewünschten Spaltmaßes wird der Rotor relativ zum Stator bezüglich der Position seiner Rotationsachse fixiert, und das beziehungsweise die Hydraulikhubkissen werden, vorzugsweise nach Druckentlastung, wieder entfernt.

Im Anschluss an die Fixierung des Rotors relativ zum Stator, was auf allgemein bekannte Weise bei der Montage einer Windenergieanlage oder eines anderweitigen Generators vorgenommen wird, können die Hydraulikhubkissen druckentlastet und entnommen werden.

Aus dem Vorstehenden ergibt sich auch die erfindungsgemäße Verwendung des Hydraulikhubkissens zum Ausrichten der Relativposition zwischen Rotor und Stator eines Generators.

Wie sich ferner aus dem Vorstehenden ergibt, ist mit der Erfindung eine besonders einfache und zuverlässige Möglichkeit bereitgestellt, Rotoren und Statoren von Generatoren zueinander so auszurichten, dass ein konstanter Luftspalt zwischen den Bauteilen erreicht wird. Die Hydraulikhubkissen sind auf ökonomische Weise herzustellen und wiederverwendbar, was speziell bei Fertigung höherer Stückzahlen signifikante Vorteile mit sich bringt.

## Patentansprüche

1. Hydraulikflachzylinder (1), mit
einem Gehäuse (3), welches eine erste Kraftübertragungsfläche (5), eine zweite Kraftübertragungsfläche (7), und eine Gehäusewand (9) aufweist, wobei die zweite Kraftübertragungsfläche relativ zur der ersten Kraftübertragungsfläche abstandsveränderlich angeordnet ist, und
einem Hydraulikanschluss (11) zum Ein- und Auslassen von Hydraulikflüssigkeit in das Gehäuse bzw. aus dem Gehäuse,
wobei die Gehäusewand, die erste und zweite Kraftübertragungsfläche (5, 7) ein einteiliges Druckkissen ausbilden,
wobei die beiden Kraftübertragungsflächen (5, 7) im drucklosen Zustand unmittelbar benachbart zueinander angeordnet sind, und
**dadurch gekennzeichnet, dass** die Gehäusewand (9) faltenbalgförmig aus mehreren gestapelten Blechen (15, 15', 15") gebildet ist.

2. Hydraulikflachzylinder (1) nach Anspruch 1,
wobei die erste und zweite Kraftübertragungsfläche (5, 7) mittels der Gehäusewand (9) miteinander verbunden sind, wobei die Gehäusewand (9) mittels Druckbeaufschlagung des Gehäuses (3) elastisch verformbar ist.

3. Hydraulikflachzylinder (1) nach Anspruch 1 oder 2,
wobei der Hydraulikflachzylinder (1) kolbenlos ausgebildet ist; und/oder wobei das Gehäuse (3) einen Grundkörper (13) aufweist, in welchem der Hydraulikanschluss (11) ausgebildet ist.

4. Hydraulikflachzylinder (1) nach einem der vorstehenden Ansprüche,
wobei der Grundkörper (13) die erste Kraftübertragungsfläche (5) aufweist, und wobei das Gehäuse (3) einen Kopfkörper (17) aufweist, welcher die zweite Kraftübertragungsfläche (7) aufweist.

5. Hydraulikflachzylinder (1) nach Anspruch 4,
wobei ein erstes Blech (15') entlang an dem Grundkörper befestigt ist,
ein letztes Blech (15") an dem Kopfkörper (17) befestigt ist, und
zwischen dem ersten und letzten Blech (15', 15") weitere Bleche (15) gestapelt sind, die auf einer ersten Seite entlang eines ersten Flächenbereichs (19) an einem benachbarten Blech befestigt sind, und auf einer der ersten Seite gegenüberliegenden zweiten Seite entlang eines zweiten Flächenbereichs (21) mit einem benachbarten Blech verbunden sind, wobei zwischen dem ersten und zweiten Flächenbereich (19, 21) jeweils ein Versatz (23) quer zur Umfangsrichtung ausgebildet ist, entlang dessen die benachbarten Bleche (15, 15', 15") unverbunden bleiben.

6. Hydraulikflachzylinder (1) nach einem der vorstehenden Ansprüche,
wobei die Bleche (15, 15', 15") einen zylindrischen äußeren Umfang aufweisen, insbesondere ringförmig ausgebildet sind.

7. Hydraulikflachzylinder (1) nach Anspruch 5 oder 6,
wobei der erste Flächenbereich (19) als Band ausgebildet ist, das sich vom äußeren Umfang nach innen erstreckt, und der zweite Flächenbereich (21) als Band ausgebildet ist, das sich vom inneren Umfang nach außen erstreckt.

8. Hydraulikflachzylinder (1) nach einem der vorstehenden Ansprüche,
wobei der Hydraulikanschluss (11) eine Kupplung zum wahlweisen Anschluss einer Befüllleitung oder eines Druckmessaufnehmers zum Ermitteln des Gehäuseinnendrucks aufweist.

9. Hydraulikhubkissen (101),
welches als Flachkörper ausgebildet und zum Einführen in einen Luftspalt (205) zwischen einem Rotor (203) und einem Stator (201) dimensioniert ist, und welches ein Gehäuse (103) mit einer ersten Kraftübertragungsfläche (105), einer zweiten Kraftübertragungsfläche (107), und einer Gehäusewand (3, 103a,b) aufweist, wobei die zweite Kraftübertragungsfläche (107) relativ zu der ersten Kraftübertragungsfläche (105) abstandsveränderlich angeordnet ist, sowie
einen Hydraulikanschluss (111) zum Ein- und Auslassen von Hydraulikflüssigkeit in das Gehäuse (103) bzw. aus dem Gehäuse aufweist,
wobei die Gehäusewand (103a,b) die erste und zweite Kraftübertragungsfläche (105, 107) ein einteiliges Druckkissen ausbilden,
**dadurch gekennzeichnet, dass** das einteilige Druckkissen einen ersten Volumenabschnitt (108a), einen zweiten Volumenabschnitt (108b) und einen die beiden Volumenabschnitte (108a,b) fluidleitend verbindenden Verteilerkanal (108c) aufweist, und wobei der Hydraulikanschluss (111) an dem Verteilerkanal (108c) angeordnet ist.

10. Hydraulikhubkissen (101) nach Anspruch 9,
wobei die erste und zweite Kraftübertragungsfläche (105, 107) mittels der Gehäusewand (103a,b) miteinander verbunden sind, wobei die Gehäusewand mittels Druckbeaufschlagung des Gehäuses elastisch derart verformbar ist, dass sich der Abstand der Kraftübertagungsflächen (105, 107) ändert.

11. Hydraulikhubkissen (101) nach Anspruch 9 oder 10,
wobei der Hydraulikanschluss (111) eine Kupplung zum wahlweisen Anschluss einer Befüllleitung oder eines Druckmessaufnehmers zum Ermitteln des Gehäuseinnendrucks aufweist.

12. Hydraulik-Hubsystem, mit
einer Fluidzufuhreinheit zur Bereitstellung druckbeaufschlagter Hydraulikflüssigkeit,
- einem oder mehreren Hydraulikflachzylindern (1) oder einem oder mehreren Hydraulikhubkissen (101); und
- einem Fluidleitungsnetz, welches jeweils eine fluidleitende Verbindung zwischen den Hydraulikflachzylindern, oder Hydraulikhubkissen, und der Fluidzufuhreinheit herstellen,
**dadurch gekennzeichnet, dass** wenigstens einer der Hydraulikflachzylinder (1), vorzugsweise mehrere oder sämtliche der Hydraulikflachzylinder (1), gemäß einem der Ansprüche 1 bis 8, oder wenigstens eines der Hydraulikhubkissen (101), vorzugsweise mehrere oder sämtliche der Hydraulikhubkissen, gemäß einem der Ansprüche 9 bis 11 ausgebildet sind.

13. Hubsystem nach Anspruch 12,
**dadurch gekennzeichnet, dass** jeder Hydraulikflachzylinder (1), oder jedes Hydraulikhubkissen (101) mit einem individuellen Druck beaufschlagbar ist.

14. Verfahren zum Ausrichten der Relativposition eines Rotors (203) zu einem Stator (201) eines Generators (200), insbesondere eines Synchrongenerators, wobei zwischen dem Rotor und dem Stator ein Luftspalt (205) ausgebildet ist, umfassend die Schritte:
- Einführen eines oder mehrerer Hydraulikhubkissen (101) nach einem der Ansprüche 9 bis 11 in den Luftspalt (205), und
- Beaufschlagen des oder der Hydraulikhubkissen (101) derart mit druckbeaufschlagter Hydraulikflüssigkeit, dass der Luftspalt (205) entlang seines Umfangs konstant ist.

15. Verwendung eines Hydraulikhubkissens nach einem der Ansprüche 9 bis 11 oder eines Hubsystems nach Anspruch 12 oder 13 zum Ausrichten eines Generators einer Windenergieanlage.

## Claims

1. A flat hydraulic cylinder (1) comprising
a housing (3) which has a first force transmission surface (5), a second force transmission surface (7) and a housing wall (9), wherein the second force transmission surface is arranged variably in spacing relative to the first force transmission surface, and
a hydraulic connection (11) for the inlet and outlet of hydraulic fluid into and out of the housing,
wherein the housing wall and the first and second force transmission surfaces (5, 7) form a one-piece pressure cushion,
wherein the two force transmission surfaces (5, 7) be arranged in immediately adjacent relationship with each other in the pressure-less condition, and
**characterised in that** the housing wall (9) is formed in the configuration of a bellows from a plurality of stacked plates (15, 15', 15");

2. A flat hydraulic cylinder (1) according to claim 1
wherein the first and second transmission surfaces (5, 7) are connected together by means of the housing wall (9), wherein the housing wall (9) is elastically deformable by means of the housing (3) being subjected to pressure.

3. A flat hydraulic cylinder (1) according to claim 1 or claim 2
wherein the flat hydraulic cylinder (1) is of a piston-less structure; and/or
wherein the housing (3) has a main body (13) in which the hydraulic connection (11) is provided.

4. A flat hydraulic cylinder (1) according to one of the preceding claims
wherein the main body (13) has the first force transmission surface (5) and wherein the housing (3) has a head member (17) which has the second force transmission surface (7).

5. A flat hydraulic cylinder (1) according to claim 4
wherein a first plate (15') is fixed to the main body along same, a last plate (15") is fixed to the head member (17) and stacked between the first and last plates (15', 15") are further plates (15) which are fixed on a first side along a first surface region (19) to an adjacent plate and on a second side in opposite relationship to the first side are connected along a second surface region (21) to an adjacent plate, wherein provided between the first and second surface regions (19, 21) is a displacement (23) transversely relative to the peripheral direction, along which displacement the adjacent plates (15, 15', 15") remain unconnected.

6. A flat hydraulic cylinder (1) according to one of the preceding claims
wherein the plates (15, 15', 15") have a cylindrical outer periphery, and in particular are of an annular configuration.

7. A flat hydraulic cylinder (1) according to claim 5 or claim 6
wherein the first surface region (9) is in the form of a band which extends inwardly from the outer periphery and the second surface region (21) is in the form of a band which extends outwardly from the inner periphery.

8. A flat hydraulic cylinder (1) according to one of the preceding claims
wherein the hydraulic connection (11) has a coupling for selectively connecting a filling line or a pressure measurement pickup for ascertaining the internal pressure in the housing.

9. A hydraulic lift cushion (101)
which is in the form of a flat body and is dimensioned for introduction into an air gap (205) between a rotor (203) and a stator (201) and which has
a housing (103) comprising a first force transmission surface (105), a second force transmission surface (107) and a housing wall (3, 103a, b), wherein the second force transmission surface (7) is arranged variably in spacing relative to the first force transmission surface (105), and
a hydraulic connection (111) for the inlet and outlet of hydraulic fluid into and out of the housing (103),
wherein the housing wall (103a, b) and the first and second force transmission surfaces (105, 107) form a one-piece pressure cushion,
**characterised in that** the one-piece pressure cushion has a first volume portion (108a), a second volume portion (108b) and a distributor passage (108c) connecting the two volume portions (108a, b) in fluid-conducting relationship, and wherein the hydraulic connection (111) is arranged at the distributor passage (108c).

10. A hydraulic lift cushion (101) according to claim 9
wherein the first and second transmission surfaces (105, 107) are connected together by means of the housing wall (103a, b), wherein the housing wall is elastically deformable by means of the housing being subjected to pressure in such a way that the spacing of the force transmission surfaces (105, 107) changes.

11. A hydraulic lift cushion (101) according to claim 9 or 10
wherein the hydraulic connection (111) has a coupling for selectively connecting a filling line or a pressure measurement pickup for ascertaining the internal pressure in the housing.

12. A hydraulic lift system comprising a fluid feed unit for providing pressurised hydraulic fluid,
- one or more flat hydraulic cylinders (1) or one or more hydraulic lift cushions (101); and
- a fluid line network which respectively produces a fluid-conducting connection between the flat hydraulic cylinders or hydraulic lift cushions and the fluid feed unit,
**characterised in that** at least one of the flat hydraulic cylinders (1) and preferably a plurality of or all of the flat hydraulic cylinders (1) are designed in accordance with one of claims 1 to 8 or at least one of the hydraulic lift cushions (101) and preferably a plurality of or all of the hydraulic lift cushions are designed in accordance with one of claims 9 to 11.

13. A lift system according to claim 12
**characterised in that** each flat hydraulic cylinder (1) or each hydraulic lift cushion (101) can be actuated with an individual pressure.

14. A method of orienting the relative position of a rotor (203) with respect to a stator (201) of a generator (200), in particular a synchronous generator, wherein there is an air gap (205) between the rotor and the stator, including the steps:
- introducing one or more hydraulic lift cushions (101) according to one of the claims 9 to 11 into the air gap (205), and
- actuating the hydraulic lift cushion or cushions (101) with pressurised hydraulic fluid in such a way that the air gap (205) is constant along its periphery.

15. Use of a hydraulic lift cushion according to one of claims 9 to 11 or a lift system according to claim 12 or claim 13 for orientation of a generator of a wind power installation.

## Revendications

1. Vérin hydraulique plat (1), avec
un boîtier (3) qui présente une première surface de transmission de force (5), une seconde surface de transmission de force (7), et une paroi de boîtier (9), dans lequel la seconde surface de transmission de force est agencée par rapport à la première surface de transmission de force à distance modifiable, et
un raccordement hydraulique (11) pour l'entrée et la sortie de liquide hydraulique dans le boîtier ou du boîtier,
dans lequel la paroi de boîtier, les première et seconde surfaces de transmission de force (5, 7) réalisent un coussin de pression d'un seul tenant,
dans lequel les deux surfaces de transmission de force (5, 7) sont agencées de manière directement contigüe l'une à l'autre dans l'état sans pression, et
**caractérisé en ce que** la paroi de boîtier (9) est formée en forme de soufflet de plusieurs tôles empilées (15, 15', 15").

2. Vérin hydraulique plat (1) selon la revendication 1,
dans lequel les première et seconde surfaces de transmission de force (5, 7) sont reliées entre elles au moyen de la paroi de boîtier (9), dans lequel la paroi de boîtier (9) est déformable élastiquement au moyen de la sollicitation de pression du boîtier (3).

3. Vérin hydraulique plat (1) selon la revendication 1 ou 2,
dans lequel le vérin hydraulique plat (1) est réalisé sans piston ; et/ou dans lequel le boîtier (3) présente un corps de base (13) dans lequel le raccordement hydraulique (11) est réalisé.

4. Vérin hydraulique plat (1) selon l'une des revendications précédentes,
dans lequel le corps de base (13) présente la première surface de transmission de force (5), et dans lequel le boîtier (3) présente un corps de tête (17) qui présente la seconde surface de transmission de force (7).

5. Vérin hydraulique plat (1) selon la revendication 4,
dans lequel une première tôle (15') est fixée le long du corps de base,
une dernière tôle (15") est fixée au niveau du corps de tête (17), et
entre les première et dernière tôles (15', 15") d'autres tôles (15) sont empilées, lesquelles sont fixées sur un premier côté le long d'une première zone de surface (19) au niveau d'une tôle contigüe, et sur un second côté opposé au premier côté le long d'une seconde zone de surface (21) sont reliées à une tôle contigüe, dans lequel un déport (23) est réalisé respectivement entre les première et seconde zones de surface (19, 21) transversalement au sens périphérique, le long duquel les tôles contigües (15, 15', 15") restent non reliées.

6. Vérin hydraulique plat (1) selon l'une des revendications précédentes,
dans lequel les tôles (15, 15', 15") présentent une périphérie extérieure cylindrique, en particulier sont réalisées de manière annulaire.

7. Vérin hydraulique plat (1) selon la revendication 5 ou 6,
dans lequel la première zone de surface (19) est réalisée comme bande qui s'étend de la périphérie extérieure vers l'intérieur, et la seconde zone de surface (21) est réalisée comme bande qui s'étend de la périphérie intérieure vers l'extérieur.

8. Vérin hydraulique plat (1) selon l'une des revendications précédentes,
dans lequel le raccordement hydraulique (11) présente un couplage pour le raccordement au choix d'une conduite de remplissage ou d'un manomètre pour la détermination de la pression interne de boîtier.

9. Coussin de levage hydraulique (101)
qui est réalisé comme corps plat et est dimensionné pour l'introduction dans une fente d'air (205) entre un rotor (203) et un stator (201), et qui
présente un boîtier (103) avec une première surface de transmission de force (105), une seconde surface de transmission de force (107), et une paroi de boîtier (3, 103a, b), dans lequel la seconde surface de transmission de force (107) est agencée par rapport à la première surface de transmission de force (105) à distance modifiable, ainsi que un raccordement hydraulique (111) pour l'entrée et la sortie de liquide hydraulique dans le boîtier (103) ou du boîtier,
dans lequel la paroi de boîtier (103a, b), les première et seconde surfaces de transmission de force (105, 107) réalisent un coussin de pression d'un seul tenant,
**caractérisé en ce que** le coussin de pression d'un seul tenant présente une première section de volume (108a), une seconde section de volume (108b) et un canal de distribution (108c) reliant de manière à conduire le fluide les deux sections de volume (108a, b), et dans lequel le raccordement hydraulique (111) est agencé au niveau du canal de distribution (108c).

10. Coussin de levage hydraulique (101) selon la revendication 9,
dans lequel les première et seconde surfaces de transmission de force (105, 107) sont reliées entre elles au moyen de la paroi de boîtier (103a, b), dans lequel la paroi de boîtier est déformable élastiquement au moyen de la sollicitation de pression du boîtier de telle manière que la distance des surfaces de transmission de force (105, 107) se modifie.

11. Coussin de levage hydraulique (101) selon la revendication 9 ou 10,
dans lequel le raccordement hydraulique (111) présente un couplage pour le raccordement au choix d'une conduite de remplissage ou d'un manomètre pour la détermination de la pression interne de boîtier.

12. Système de levage hydraulique avec
une unité d'amenée de liquide pour la mise à disposition de liquide hydraulique sollicité en pression,
- un ou plusieurs vérins plats hydrauliques (1) ou un ou plusieurs coussins de levage hydrauliques (101) ; et
- un réseau de conduite de fluide qui établit respectivement une liaison conduisant du fluide entre les vérins plats hydrauliques, ou les coussins de levage hydrauliques, et l'unité d'amenée de fluide,
**caractérisé en ce qu'**au moins un des vérins plats hydrauliques (1), de préférence plusieurs ou tous les vérins plats hydrauliques (1), sont réalisés selon l'une des revendications 1 à 8, ou au moins un des coussins de levage hydrauliques (101), de préférence plusieurs ou tous les coussins de levage hydrauliques, sont réalisés selon l'une des revendications 9 à 11.

13. Système de levage selon la revendication 12,
**caractérisé en ce que** chaque vérin hydraulique plat (1) ou chaque coussin de levage hydraulique (101) peut être sollicité avec une pression individuelle.

14. Procédé d'orientation de la position relative d'un rotor (203) par rapport à un stator (201) d'un générateur (200), en particulier d'un générateur synchrone, dans lequel une fente d'air (205) est réalisée entre le rotor et le stator, comprenant les étapes :
- d'introduction d'un ou plusieurs coussins de levage hydraulique (101) selon l'une des revendications 9 à 11 dans la fente d'air (205), et
- de sollicitation du ou des coussins de levage hydrauliques (101) avec un liquide hydraulique sollicité en pression de telle manière que la fente d'air (205) soit constante le long de sa périphérie.

15. Utilisation d'un coussin de levage hydraulique selon l'une des revendications 9 à 11 ou d'un système de levage selon la revendication 12 ou 13 pour l'orientation d'un générateur d'une éolienne.
